# FASCICULE DE BREVET EUROPEEN

(11) **EP 0 591 037 B1**
(45) Date de publication et mention de la délivrance du brevet: **12.02.1997**
(21) Numéro de dépôt: 93402355.7
(22) Date de dépôt: 27.09.1993
(51) Int. Cl.: G01V 1/40, G01V 1/28

(54) **Méthode d'acquisition et de traitement de données pour suivre le déplacement des fluides dans un réservoir**
Verfahren zur Erfassung und Verarbeitung von Daten für die Überwachung der Verlagerung von Flüssigkeiten in einem Reservoir
Method for obtaining and treating data for monitoring the movement of fluids in a reservoir

(30) Priorité: 28.09.1992 FR 9211530
(43) Date de publication de la demande: 06.04.1994
(73) Titulaire: COMPAGNIE GENERALE DE GEOPHYSIQUE, F-91300 Massy (FR)
(72) Inventeur: Mougenot, Denis, F-75008 Paris (FR); Lafet, Yves, F-75015 Paris (FR)
(74) Mandataire: Martin, Jean-Jacques

(56) Documents cités:
- GB-A- 2 153 529
- US-A- 2 900 037
- SPE FORMATION EVALUATION vol. 6, no. 2 , Juin 1991 , TEXAS, USA pages 141 - 150 R.J. GREAVES ET AL 'New dimensions in geophysics for reservoir monitoring'

## Description

La présente invention concerne une méthode d'acquisition et de traitement de données sismiques, utilisée dans le cadre d'une surveillance répétitive du déplacement des fluides imprégnant un réservoir situé en profondeur dans le sous-sol en dessous d'une zone d'altération superficielle.

L'invention trouve une application particulièrement avantageuse dans le domaine de la géophysique appliquée où l'on recherche notamment à recueillir des informations sur les déplacements des hydrocarbures et de l'eau dans un réservoir souterrain par des méthodes de sismique réflexion répétée.

En effet, la sismique réflexion permet de reconstituer des déformations du sous-sol à partir de la mesure des temps de propagation des ondes sismiques émises jusqu'aux principales interfaces. En outre, lorsque le rapport signal sur bruit des enregistrements est bon, il est possible de mesurer la réflectivité de ces interfaces, qui est proportionnelle à l'amplitude des ondes sismiques réfléchies. De ce fait, il est possible de suivre des variations de lithologie ou de porosité du sous-sol, et donc de décrire par exemple de manière plus précise la nature des réservoirs souterrains à hydrocarbures.

En ce qui concerne la détection des fluides dans un tel réservoir, il arrive que dans des conditions favorables, c'est-à-dire un réservoir meuble et poreux contenant du gaz ou de l'huile à faible viscosité, l'on repère sur un profil de sismique réflexion la présence de fluides ou la position de leurs interfaces, à l'origine d'anomalies d'amplitude ou de changement de configuration des réflexions sismiques. Mais, dans la plupart des cas, cette détection directe des fluides n'est pas possible à cause des faibles variations de réflectivité induites par le déplacement des fluides ou à cause d'un manque de résolution de la méthode employée.

Une solution technique aux problèmes précités de la sismique réflexion simple est la surveillance répétitive, c'est-à-dire un procédé d'enregistrement de sismique réflexion répété à des intervalles de temps suffisants pour que le déplacement des fluides dans le réservoir produise des différences détectables de temps de propagation ou d'amplitude des ondes réfléchies, entre les profils de sismique réflexion successifs. En comparant deux enregistrement, on réalise une mesure relative des ondes sismiques réfléchies, dont la sensibilité est bien supérieure à celle d'une acquisition unique dans le cas de la sismique réflexion simple, car elle permet de repérer des déplacements des fluides sans que ceux-ci soient détectés directement.

Il convient cependant de préciser que la surveillance répétitive nécessite, quelle que soit la méthode employée pour obtenir les enregistrements de sismique réflexion, une utilisation répétée des dispositifs de mise en oeuvre, repositionnés de manière stricte, et des enregistrements présentant un rapport signal sur bruit élevé et une bonne résolution verticale.

Actuellement, les méthodes de sismique réflexion connues (US-A-2 900 037, GB-A-2 153 529) et mises en oeuvre dans le cadre d'une surveillance répétitive, sont des méthodes sismiques à partir de la surface en 2D ou 3D, ou puits-à-puits ou bien mixte surface-puits comme les P. S. V (Profil de Sismique Vertical). A titre de document de référence sur les méthodes de géophysique employées pour effectuer la surveillance répétitive des fluides, on peut consulter le document "New Dimensions in Geophysics for Resevoir Monitoring, SPE formation Evaluation", Juin 1991, p. 141-150 (R.J. Greaves, W.B. Beydoun et B.R. Spies).

D'une manière générale, toutes ces méthodes d'acquisition de sismique réflexion précitées visent à obtenir une image continue du sous-sol (sur une surface, une ligne ou près d'un puits) et utilisent toutes un procédé d'addition en couverture multiple pour améliorer le rapport signal sur bruit des enregistrements obtenus.

Dans le cadre de la surveillance répétitive, aucune de ces méthodes précitées bien connues de l'homme du métier ne sont satisfaisantes car elles se heurtent, en terrestre, à des problèmes d'accessibilité et de variation saisonnière des propriétés des niveaux superficiels du sous-sol, et en marine, aux difficultés de repositionnement exact des passages successifs.

A terre, la réalisation de sismique réflexion à partir de la surface en 2D ou en 3D est souvent difficile car elle nécessite la mise en place d'un grand nombre de récepteurs sur une surface étendue, ce qui pose des problèmes d'accessibilité sur le terrain (viabilité, permittage) et d'immobilisation ou de repositionnement d'un dispositif d'acquisition important. De plus, les enregistrements obtenus à l'aide d'une sismique de surface présentent un rapport signal sur bruit moyen car le bruit sismique est important en surface. Ce bruit sismique en surface est une onde de sol et une onde aérienne. D'autre part la résolution de ces enregistrements est faible car il y a une absorption de hautes fréquences dans la zone d'altération superficielle du sous-sol à étudier, et un filtrage lié aux interférences entre les récepteurs disposés sur le sol. En outre, le coût de mise en oeuvre de la sismique de surface est relativement élevé.

Les méthodes de sismique de puits fournissent des enregistrements dont la résolution et le rapport signal sur bruit sont en général adaptés à la surveillance répétitive, mais la réalisation de ces méthodes est difficile à cause de l'accessibilité limitée des puits et leur investigation reste ponctuelle autour des seuls puits existants.

La présente invention propose une nouvelle méthode d'acquisition et de traitement de données sismiques, adaptée à la surveillance répétitive par sismique réflexion des fluides dans un réservoir souterrain, qui vise à pallier les inconvénients des méthodes sismiques antérieures précitées.

Plus particulièrement, selon l'invention, cette méthode comporte les étapes suivantes consistant à :
a) aménager en chaque point d'une grille prédéterminée en surface, un trou d'axe vertical de faible profondeur dans le sous-sol au-dessus du réservoir, et traversant la zone d'altération superficielle,
b) positionner dans chaque trou suivant son axe vertical une pluralité de récepteurs fixes et destinés à être connectés séparément à un enregistreur placé en surface,
c) émettre à proximité de chaque trou des ondes sismiques dans le sous-sol au moyen d'une source émettrice placée en surface à proximité de la verticale de ce trou,
d) enregistrer pour chaque trou, au moyen des récepteurs placés dans ledit trou, les ondes sismiques incidentes directes et les ondes sismiques réfléchies aux interfaces des couches profondes du sous-sol, chaque récepteur fournissant un enregistrement séparé d'une onde incidente et de plusieurs ondes réfléchies,
e) pour chaque trou, effectuer le traitement suivant :
   - pointer la première arrivée des ondes incidentes directes,
   - horizontaliser les ondes réfléchies,
   - séparer les ondes réfléchies et les ondes incidentes directes,
   - déconvoluer récepteur par récepteur les ondes réféchies par l'onde incidente directe afin d'obtenir pour chaque récepteur une trace 0-phase,
   - additionner les traces 0-phase provenant des récepteurs pour obtenir une trace 0-phase à déport nul de faible couverture.

On entend ici par une trace 0-phase, une trace constituée de réflexions dont les amplitudes maximales ou minimales sont situées à l'aplomb (en temps de propagation) des interfaces réfléchissants du sous-sol et dont les valeurs sont proportionnelles à la réfléctivité de ces interfaces. En outre, une trace à déport nul est une trace équivalente à celle qui aurait été enregistrée en utilisant un émetteur et un récepteur placés au même endroit, ce qui correspond à une propagation des ondes selon la verticale. Par ailleurs, on entend par trace de faible couverture, une trace constituée par l'addition d'un nombre réduit de traces.

Ainsi, selon la méthode d'acquisition et de traitement de données sismiques conforme à l'invention, en chaque point de la grille, une mesure correspond à une ou plusieurs émissions sismiques enregistrées séparément par chacun des récepteurs disposés verticalement dans le trou, placé en ce point, qui s'étend sous la zone d'altération superficielle du sous-sol. Avantageusement, les trous sont disposés selon une grille de points plus ou moins espacés de manière à échantillonner le réservoir de manière -représentative. On remarquera dans ce cas que l'investigation n'est pas liée à la présence et à la disponibilité de trous profonds.

Le but de la méthode selon l'invention n'est pas de reconstituer à une date donnée une image continue du sous-sol mais d'obtenir en chaque point de la grille une trace 0-phase à déport nul de faible couverture, c'est-à-dire un enregistrement des ondes réfléchies à la verticale du trou positionné en chaque point. Cette trace non migrée est représentative de la réflectivité moyenne des interfaces sur la surface éclairée par les ondes réfléchies, cette surface éclairée étant appelée zone de Fresnel.

Selon l'invention, pour chaque trou, on répète à des dates différentes, l'émission d'ondes sismiques dans le sous-sol et on compare les traces 0-phase à déport nul de faible couverture obtenues à partir des émissions effectuées aux différentes dates, en corrigeant des variations de temps de propagation liées aux modifications saisonnières dans la zone d'altération superficielle sur lesdites traces, et en calculant des différences d'amplitude et de temps de propagation au niveau des réflexions correspondantes sur lesdites traces dans le sous-sol afin d'obtenir des informations sur le déplacement des fluides dans le réservoir à étudier.

Selon l'invention, les trous réalisés permettent de garder les récepteurs enterrés, disponibles et accessibles pour chaque émission, même si les dates d'émission sont espacées de plusieurs mois ou de plusieurs années. Lors de la surveillance répétitive, la méthode selon l'invention ne nécessite pas le repositionnement ou l'immobilisation de nombreux récepteurs, comme cela est le cas pour les méthodes de sismique à partir de la surface. En utilisant de façon répétée ses propres dispositifs verticaux, la méthode selon l'invention permet d'obtenir un échantillonnage spatial et temporel du réservoir selon des intervalles déterminés par la complexité du réservoir, la vitesse de déplacement des fluides et le budget disponible. La méthode proposée, qui suppose la réalisation de trous peu profonds équipés de récepteurs, présente un coût plus faible que la répétition de profils continus nécessités par la sisimique de surface de l'art antérieur. Il convient de noter que selon l'invention l'utilisation de récepteurs enterrés et disposés verticalement permet d'obtenir des traces sismiques présentant à la fois un rapport signal sur bruit élevé et une bonne résolution verticale, en particulier grâce au filtrage vertical des effets de surface et au positionnement du dispositif sous la zone d'altération superficielle du sous-sol.

En outre, on remarquera que selon l'invention, le traitement des acquisitions sismiques comporte une étape de déconvolution niveau par niveau des ondes réfléchies par une onde directe, permettant d'obtenir des réflexions dont l'amplitude est représentative de la réflectivité du sous-sol à la verticale du trou . Cette étape du traitement avantageuse et originale, vient à l'encontre de tous les a priori de l'homme du métier. En effet, du fait que les récepteurs sont peu profonds, les ondes réfléchies parcourent un trajet beaucoup plus long que les ondes directes, et l'homme du métier peut penser a priori que l'opération de déconvolution de l'une par l'autre ne donnera pas un résultat satisfaisant. En fait, le résultat de la déconvolution est satisfaisante parce que les ondes directes et réfléchies sont essentiellement modelées par leur passage à travers la zone d'altération superficielle.

La description qui va suivre en regard des dessins annexés, donnés à titre d'exemples non limitatifs, fera bien comprendre en quoi consiste l'invention et comment elle peut être réalisée.
- La figure 1 est un schéma en perspective d'une tranche de terrain avec arrachement partiel, montrant l'installation de mise en oeuvre de la méthode selon l'invention.
- La figure 2 est une vue de détail d'un trou comportant les récepteurs permettant les enregistrements des ondes directes et réfléchies suivant la méthode d'acquisition et de traitement de données sismiques selon l'invention.
- La figure 3 est un diagramme de visualisation des ondes sismiques directe et réfléchie enregistrées par chacun des récepteurs de la figure 2.
- La figure 4 est la visualisation de la trace 0-phase obtenue après traitement pour chacun des récepteurs de la figure 2.
- la figure 5 montre la trace 0-phase à déport nul de faible couverture obtenue après addition des traces 0-phase obtenues à la figure 4.
- La figure 6 montre la correspondance entre cette trace 0-phase à déport nul, de faible couverture obtenue après traitement pour le trou de la figure 2 et les valeurs de la réflectivité des interfaces du sous-sol à la verticale dudit trou.
- La figure 7 est un exemple d'une répartition différente des fluides dans le réservoir de la figure 1 à deux dates différentes.
- La figure 8 représente deux traces sismiques enregistrées à la verticale d'un trou de la grille de la figure 1 pour les deux dates de la figure 7, et traitées selon l'invention.
- La figure 9 représente un modèle des variations des grandeurs caractéristiques de la réflectivité du réservoir de la figure 7 en fonction de la saturation en eau dans le réservoir.

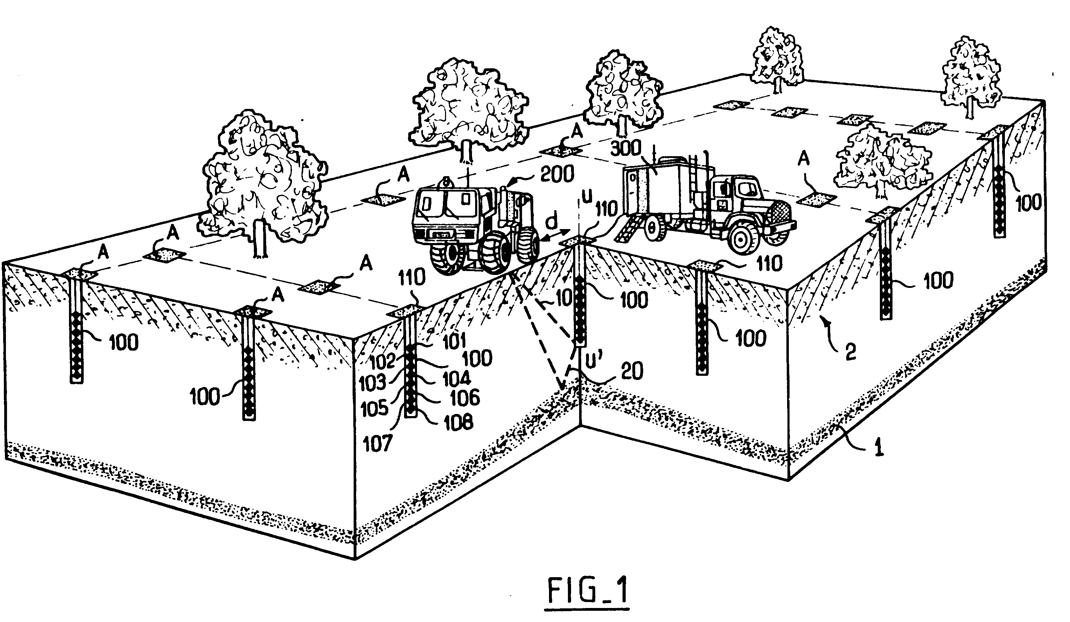

Sur la figure 1, on a représenté un exemple de portion de terrain, avec une vue partielle du sous-sol. En partant de la surface du terrain vers les couches profondes du sous-sol, on distingue tout d'abord une zone d'altération superficielle 2 qui s'étend en profondeur sur 70 mètres environ et un réservoir 1 situé à environ 1200 mètres de profondeur, contenant des fluides non représentés sur cette figure, tels que par exemple de l'eau et du gaz. Ce réservoir 1, vu en tranche, s'étend sur toute la longueur de la portion de terrain représentée. En outre, on distingue sur la figure 1 la mise en oeuvre d'un enregistrement à partir de la méthode d'acquisition et de traitement de données sismiques selon l'invention, visant à suivre notamment les déplacements des fluides dans le réservoir 1.

En ce qui concerne l'acquisition des données sismiques, suivant cette méthode, comme on peut le voir sur la figure 1, on aménage à chaque point A d'une grille prédéterminée en surface, un trou 100 d'axe vertical U-U' et de faible profondeur dans le sous-sol au-dessus du réservoir 1. Les points A de la grille sont plus ou moins espacés les uns des autres, ici par exemple de 250 à 500 mètres, de manière à échantillonner correctement le réservoir 1. Ici, la grille comporte une vingtaine de points A. Chaque trou 100 de la grille s'étend à partir de la surface jusqu'à une profondeur ici d'environ 150 mètres, à l'intérieur d'un milieu dans lequel les ondes sismiques se propagent de préférence à vitesse constante et qui se trouve sous la zone d'altération superficielle 2. Ces trous 100 non tubés ou comportant une simple chemise en polychlorure de vinyle par exemple, sont réalisés avec les foreuses classiques utilisées pour la préparation des carottages V.T, nécessaires à la mesure des temps de propagation dans les niveaux superficiels. Chaque trou 100 présente un diamètre d'environ 10 centimètres.

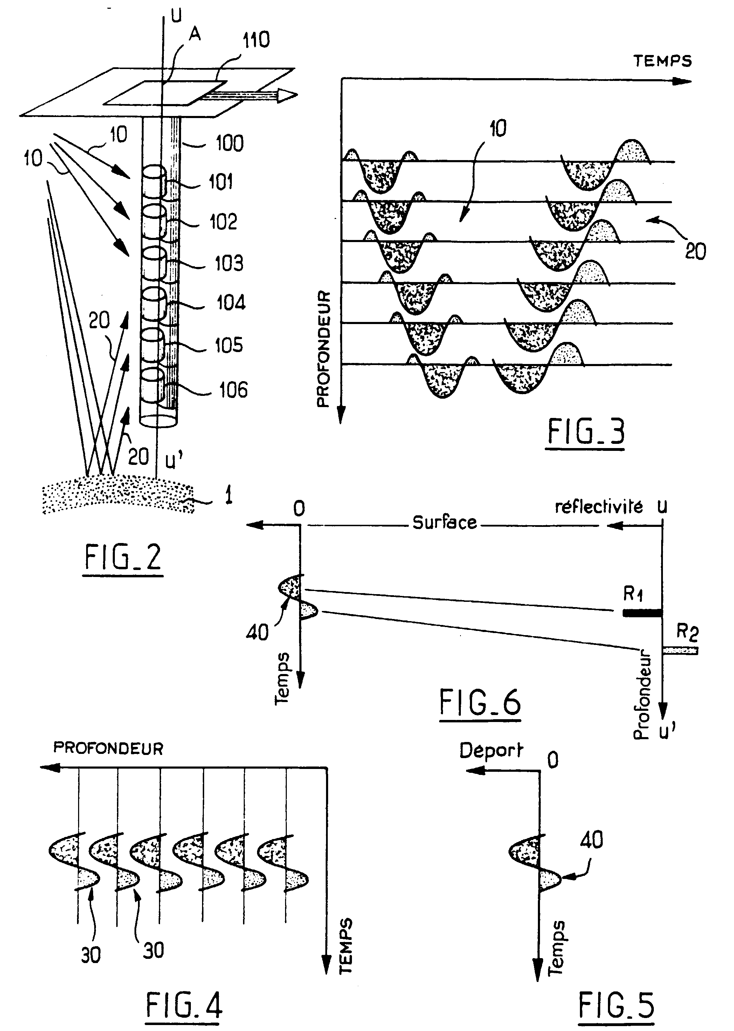

Comme on peut le voir sur les figures 1 et 2, dans chaque trou 100, on positionne suivant son axe vertical U-U' au moins six à huit récepteurs 101,102,103,104,105,106,107,108, qui sont connectés séparément jusqu'à la surface. Ces récepteurs sont distants dans le trou de deux à dix mètres environ en fonction de la vitesse des ondes émises dans le milieu environnant les récepteurs et de la fréquence des ondes émises. Les récepteurs sont descendus et cimentés directement dans chaque trou 100, afin qu'ils soient fixés dans ledit trou. Chaque récepteur est muni d'un boîtier renforçant son étanchéité et est relié à la surface à une ou plusieurs prises imperméables situées sous un regard 110 placé en surface. Lorsqu'on effectue une mesure sur un trou, comme cela sera explicité ultérieurement, les récepteurs du trou en question sont alors connectés séparément à un enregistreur 300 qui vient se brancher sur la ou les prises imperméables situées sous le regard 110. Les récepteurs utilisés sont par exemple des géophones ou bien des triphones. Pour des raisons d'encombrement, les triphones peuvent être constitués de trois mini-capteurs séparés, disposés dans un tube plastique. Leur orientation dans le trou pourra être déterminée par rapport à la direction d'une émission réalisée en surface avec un certain déport.

Comme le montre les figures 1 et 2, dans une étape suivante de la méthode selon l'invention, on émet pour chaque trou 100, des ondes sismiques dans le sous-sol au moyen d'une source émettrice 200 placée en surface à proximité de la verticale U-U' de chaque trou 100. Ici la source émettrice 200 est placée à environ 20 mètres de la verticale du trou en question. On réalise de préférence à chaque enregistrement plusieurs émissions, soit sur place pour améliorer le rapport signal sur bruit des enregistrements, soit en se décalant progressivement de manière à obtenir une collection de traces autour de la verticale U-U' du trou 100. Cependant, la faible profondeur des récepteurs peut limiter l'efficacité du traitement proposé à des déports ne dépassant pas la profondeur moyenne de ces récepteurs, soit ici environ 100 mètres de part et d'autre du trou 100.

Comme le montre les figures 2 et 3, chaque émission est à l'origine sur chacun des récepteurs du trou 100 enregistrés séparément, d'une arrivée directe d'onde incidente directe ou onde descendante 10, et d'arrivées d'ondes réfléchies aux interfaces du sous-sol, formées notamment par les fluides du réservoir 1, ou ondes montantes 20. Les ondes sont enregistrées et transmises à l'enregistreur 300.

Ainsi, chaque émission ou groupe d'émissions sur chaque trou fournit un ou plusieurs enregistrements sismiques à une date donnée qui vont permettre de mesurer la réflectivité du sous-sol à la verticale de chaque trou. Le ou les enregistrements obtenus à une date donnée sont transformés pour chaque trou suivant les étapes de traitement de la méthode selon l'invention. Il convient de noter que dans le cadre d'une surveillance répétitive, les dates de prise de mesures ou d'enregistrements sismiques peuvent être espacées de plusieurs mois voire de plusieurs années.

Nous allons maintenant décrire les étapes de traitement de la méthode selon l'invention pour une émission à proximité d'un trou, celles-ci étant montrées plus particulièrement sur les figures 4, 5 et 6.

Pour chaque trou, on pointe les arrivées premières des ondes incidentes directes 10 de manière à mesurer le temps de propagation de ces ondes, jusqu'aux différents récepteurs. Ces délais sont ensuite utilisés de deux façons : ils sont ajoutés aux temps d'arrivée des différentes ondes réfléchies 20, ce qui a pour effet de les horizontaliser ; ils servent à identifier et à corriger les variations saisonnières de vitesse dans la zone d'altération superficielle. On sépare ensuite les ondes montantes (réfléchies) 20 et les ondes descendantes (directes) 10 par un filtrage en fréquence et en nombre d'ondes sachant que lesdites ondes montantes et descendantes ne présentent pas la même vitesse apparente. Puis, on déconvolue récepteur par récepteur les ondes montantes ou réfléchies 20 par l'onde descendante ou directe 10 arrivant au récepteur en question afin d'obtenir pour chaque récepteur une trace 0-phase 30, comme le montre la figure 4. Ces traces 0-phase présentent des réflexions dont les temps de propagation et les amplitudes maximales ou minimales sont proportionnels à la profondeur et à la réflectivité des différentes interfaces du sous-sol et sont indépendants des conditions de surface après correction des variations. Il convient de préciser que la réussite de cette déconvolution suppose que les ondes montantes 20 et descendantes 10 soient presque entièrement modelées lors de leur passage à travers la zone d'altération superficielle. C'est la condition pour que l'onde descendante 10 soit représentative des ondes montantes 20, dont le trajet sous ladite zone d'altération 2 est beaucoup plus long que celui des ondes descendantes 10, et donc que la déconvolution soit efficace. Dans l'exemple proposé, les ondes descendantes parcourent environ 100 mètres alors que les ondes montantes parcourent environ 2000 à 2500 mètres. Dans la méthode PSV, où les récepteurs sont descendus dans le puits jusqu'à proximité du réservoir, cette différence de trajet est beaucoup moins importante.

Par suite, après addition des traces 0-phase horizontalisées, on obtient une trace 0-phase à déport nul de faible couverture 40, comme le montre la figure 5, c'est-à-dire que pour cette nouvelle trace 40 tout se passe comme si la propagation des ondes s'était effectuée à la verticale dudit trou. La figure 6 montre la correspondance entre cette trace 0-phase à déport nul 40, et la réflectivité R₁,R₂ des interfaces profondes du sous-sol autour du trou 100 considéré. Il convient de noter que selon la méthode d'acquisition et de traitement décrite ici, on peut à la fois, compenser les modifications saisonnières des temps de propagation dans la zone d'altération superficielle grâce à la mesure des délais sur les ondes descendantes 10 (pointé des arrivées premières), et tenir compte des variations d'amplitude de l'émission grâce à la déconvolution, c'est-à-dire que l'on peut faire abstraction de toutes les variations superficielles d'une acquisition sur l'autre.

Selon le mode de réalisation décrit aux figures 1, 2, 3, 4, 5 et 6, la méthode d'acquisition et de traitement de données sismiques permet, d'une part, à une date donnée d'obtenir un échantillonnage de la réflectivité du sous-sol suivant la grille représentée sur la figure 1. D'autre part, elle permet en répétant à des dates espacées dans le temps J₁ et J₂ les émissions sismiques à proximité des différents trous 100 de la grille, et en comparant pour chaque trou les différentes traces 0-phase à déport nul obtenues à l'issue du traitement, d'obtenir une évaluation des variations de saturation des fluides dans le réservoir 1 répartie de façon discrète.

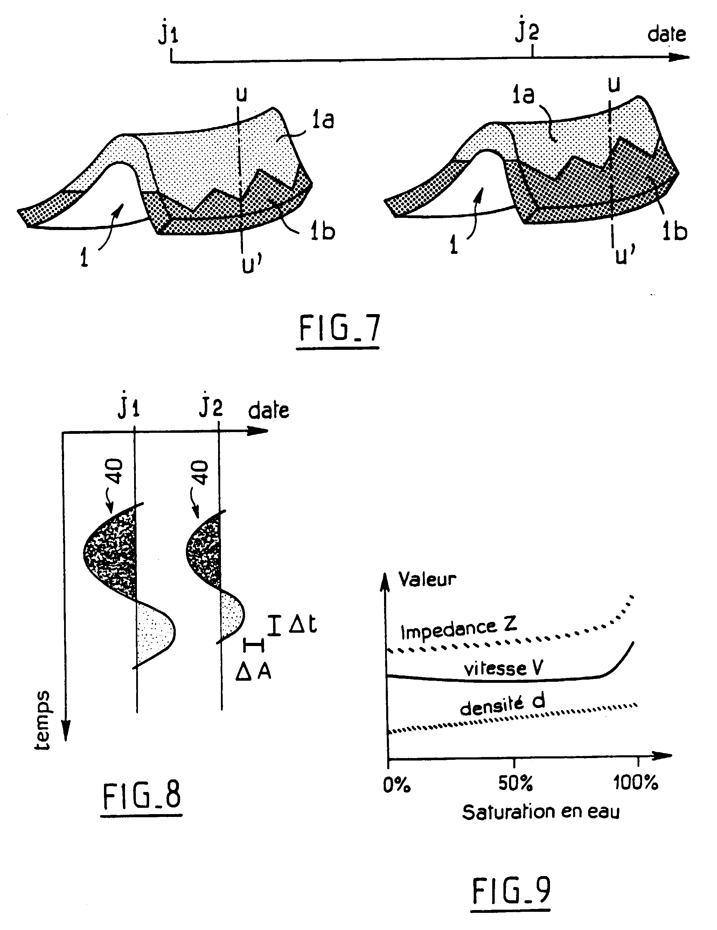

Par exemple, comme le montre la figure 7, on suppose que le réservoir 1 comporte deux fluides 1a, 1b, tels que du gaz et de l'eau séparés par une transition progressive, qui entre des dates J₁ et J₂ se déplacera vers le haut par suite de la production du gaz. A la date J₁ et sur une verticale U-U', le réservoir I comporte une saturation en hydrocarbure d'environ 60 %, et une saturation en eau de 40 %, tandis qu'ultérieurement, à la date J₂, le réservoir I présente, selon la même verticale, des saturations hydrocarbure/eau inversées par suite de la remontée de la zone de transition. En appliquant la méthode décrite sur les figures 1 à 5, aux dates J₁ et J₂ et plus particulièrement en effectuant une ou plusieurs émissions à proximité de chaque trou de la grille, aux dates J₁ et J₂, en traitant les enregistrements obtenus et en comparant pour chaque trou les traces à déport nul, comme nous l'avons décrit précédemment, on obtient pour ce trou le diagramme de la figure 8 qui montre, d'une part une variation ΔA des amplitudes maximales ou minimales proportionnelles à la variation ΔR de la réflectivité des interfaces des couches profondes à la verticale du trou (donc à la variation ΔZ d'impédance accoustique) et d'autre part, une variation de temps de propagation Δt jusqu'à l'interface considérée qui traduit une variation de vitesse sismique dans les couches traversées par les ondes réfléchies 20.

A partir de l'utilisation de diagrammes théoriques du type de celui représenté figure 9, il est possible de relier les variations d'impédance ΔZ ou de vitesse V, mesurées à partir de Δ A et Δ t, à des variations de saturation en fluides et donc aux déplacements de ceux-ci.

La méthode d'acquisition et de traitement de données sismiques décrite ci-dessus peut être réalisée dans le milieu marin. Chaque point de la grille correspondrait alors à une flûte verticale comportant plusieurs hydrophones ou groupes à hydrophones, immergée au-dessus du fond et reliée à un enregistreur autonome située dans une sphère étanche. Les émissions sont réalisées à l'aplomb de la flûte à partir d'un navire sismique qui récupère l'ensemble traceur et enregistreur après chaque acquisition.

## Revendications

1. Méthode d'acquisition et de traitement de données sismiques, utilisée dans le cadre d'une surveillance répétitive du déplacement des fluides imprégnant un réservoir (1) situé en profondeur dans le sous-sol, en dessous d'une zone d'altération superficielle (2), caractérisée en ce qu'elle comporte les étapes suivantes consistant à :
a) aménager en chaque point (A) d'une grille prédéterminée en surface, un trou (100) d'axe vertical (U-U') de faible profondeur dans le sous-sol au-dessus du réservoir (1), et traversant la zone d'altération superficielle (2),
b) positionner dans chaque trou (100) suivant son axe vertical (U-U') une pluralité de récepteurs (101,102,103,104,105,106,107, 108) fixes et destinés à être connectés séparément à un enregistreur (300) placé en surface,
c) émettre à proximité de chaque trou des ondes sismiques dans le sous-sol au moyen d'une source émettrice (200) placée en surface à proximité de la verticale (U-U') de ce trou (100),
d) enregistrer pour chaque trou, au moyen des récepteurs (101,102,103,104,105,106,107,108) placés dans ledit trou (100), les ondes sismiques incidentes directes (10) et les ondes sismiques réfléchies (20) aux interfaces des couches profondes du sous-sol, chaque récepteur fournissant un enregistrement séparé d'une onde incidente (10) et de plusieurs ondes réfléchies (20),
e) pour chaque trou (100), effectuer le traitement suivant :
- pointer la première arrivée des ondes incidentes directes (10),
- horizontaliser les ondes réfléchies (20),
- séparer les ondes réfléchies (20) et les ondes incidentes directes (10),
- déconvoluer récepteur par récepteur les ondes réféchies (20) par l'onde incidente directe (10) afin d'obtenir pour chaque récepteur une trace 0-phase,
- additionner les traces 0-phase provenant des récepteurs pour obtenir une trace 0-phase à déport nul de faible couverture.

2. Méthode selon la revendication 1, caractérisée en ce que pour chaque trou, on répète à des dates différentes (J₁,J₂) l'émission d'ondes sismiques dans le sous-sol et on compare les traces 0-phase à déport nul de faible couverture obtenues à partir des émissions effectuées aux différentes dates (J₁,J₂), en corrigeant des variations de temps de propagation liées aux modifications saisonnières dans la zone d'altération superficielle sur lesdites traces, et en calculant des différences d'amplitude et de temps de propagation au niveau des réflexions correspondantes sur lesdites traces dans le sous-sol afin d'obtenir des informations sur le déplacement des fluides dans le réservoir à étudier.

## Patentansprüche

1. Verfahren zum Erfassen und Verarbeiten von seismischen Daten, das im Rahmen einer repetitiven Überwachung der Verlagerung von Fluiden verwendet wird, welche ein Reservoir (1) durchsetzen, welches sich tief im Untergrund unterhalb eines verzerrenden Oberflächenbereichs (2) befindet, dadurch gekennzeichnet, daß es die folgenden Schritte umfaßt:
a) Einbringen eines Loches (100) mit geringer Tiefe und einer vertikalen Achse (U-U') in den Untergrund oberhalb des Reservoirs (1), welches den verzerrenden Oberflächenbereich (2) durchsetzt, an jedem Punkt (A) eines vorgegebenen Gitters an der Oberfläche,
b) Anbringen einer Mehrzahl von festen Empfängern (101, 102, 103, 104, 105, 106, 107, 108) in jedem Loch (100) entlang seiner vertikalen Achse (U-U'), welche dafür vorgesehen sind, separat mit einem an der Oberfläche befindlichen Aufzeichnungsgerät (300) verbunden zu werden,
c) Aussenden von seismischen Wellen in den Untergrund in der Nähe jedes Loches mit Hilfe einer Sendequelle (200), welche sich an der Oberfläche in der Nähe der Vertikalen (U-U') dieses Lochs (100) befindet,
d) Aufzeichnen der direkt einfallenden seismischen Wellen (10) und der an den Grenzflächen der tiefen Schichten des Untergrunds reflektierten seismischen Wellen (20) für jedes Loch mit Hilfe der Empfänger (101, 102, 103, 104, 105, 106, 107, 108), welche in diesem Loch (100) angeordnet sind, wobei jeder Empfänger eine separate Aufzeichnung einer einfallenden Welle (10) und mehrerer reflektierter Wellen (20) liefert,
e) Durchführen der folgenden Verarbeitung für jedes Loch (100):
- Feststellen der ersten Ankunft der direkt einfallenden Wellen (10),
- Horizontieren der reflektierten Wellen (20),
- Trennen der reflektierten Wellen (20) von den direkt einfallenden Wellen (10),
- Entfalten der reflektierten Wellen (20) durch die direkt einfallende Welle (10) Empfänger für Empfänger, um für jeden Empfänger eine Spur mit Phase Null zu erzeugen,
- Addieren der Spuren mit Phase Null, welche von den Empfängern kommen, um eine Spur mit Phase Null und Versetzung Null und geringer Bedeckung zu erzeugen.

2. Verfahren nach Anspruch 1, dadurch gekennzeichnet, daß man für jedes Loch zu verschiedenen Zeitpunkten (J₁, J₂) die Emission von seismischen Wellen in den Untergrund wiederholt und man die Spuren mit Phase Null und Versetzung Null und geringer Bedeckung vergleicht, die man aufgrund der zu verschiedenen Zeitpunkten (J₁, J₂) erfolgten Emissionen erhalten hat, wobei man Änderungen der Propagationszeit, die mit jahreszeitlichen Änderungen in dem verzerrenden Oberflächenbereich zusammenhängen, über den Spuren korrigiert und Unterschiede der Amplitude und der Propagationszeit auf der Ebene der entsprechenden Reflexionen im Untergrund über den Spuren berechnet, um Informationen über die Verlagerung der Fluide in dem zu untersuchenden Reservoir zu gewinnen.

## Claims

1. Method of acquiring and processing seismic data for repetitive monitoring of displacement of fluids impregnating a reservoir (1) deep in the sub-surface below a surface weathered zone (2), characterised in that it comprises the steps of:
a) making at each point (A) of a predetermined grid on the surface a vertical axis (U-U') shallow borehole (100) in the sub-surface above the reservoir (1) passing through the surface weathered zone (2),
b) positioning in each borehole (100) along its vertical axis (U-U') a plurality of fixed receivers (101, 102, 103, 104, 105, 106, 107, 108) adapted to be connected separately to a recorder (300) on the surface,
c) emitting near each borehole seismic waves into the sub-surface by means of an emitter (200) on the surface near the vertical axis (U-U') of said borehole (100),
d) recording for each borehole by means of the receivers (101, 102, 103, 104, 105, 106, 107, 108) placed in said borehole (100) the direct incident seismic waves (10) and the seismic waves (20) reflected at the interfaces of deep strata of the sub-surface, each receiver providing a separate record of an incident wave (10) and a plurality of reflected waves (20),
e) carrying out the following processing for each borehole (100):
- picking the first break of direct incident waves (10),
- horizontalising the reflected waves (20),
- separating the reflected waves (20) and the direct incident waves (10),
- deconvoluting receiver by receiver the reflected waves (20) by the direct incident wave (10) in order to obtain a 0-phase trace for each receiver,
- stacking the 0-phase traces from the receivers to obtain a low coverage zero offset 0-phase trace.

2. Method according to claim 1 characterised in that the emission of seismic waves into the sub-surface is repeated at each borehole at different dates (J₁, J₂) and said low coverage zero offset 0-phase traces obtained from emissions at the different dates (J₁, J₂) are compared, correcting any variations in travel time in said traces related to seasonal changes in the surface weathered zone and calculating amplitude and travel time differences at respective reflections on said traces in the sub-surface to obtain information on the displacement of the fluids in the reservoir under study.
